# EUROPÄISCHE PATENTSCHRIFT

(11) **EP 2 836 662 B1**
(45) Veröffentlichungstag und Bekanntmachung des Hinweises auf die Patenterteilung: **10.08.2016**
(21) Anmeldenummer: 13732109.7
(22) Anmeldetag: 14.06.2013
(51) Int. Cl.: E06B 1/62

(54) **DICHTSYSTEM ZWISCHEN EINEM FENSTERRAHMEN UND EINER WAND EINES GEBÄUDES**
SEALING SYSTEM BETWEEN A WINDOW FRAME AND A WALL OF A BUILDING
SYSTÈME D'ÉTANCHÉITÉ ENTRE UN CHÂSSIS DE FENÊTRE ET UN MUR D'UN IMMEUBLE

(30) Priorität: 14.06.2012 DE 102012011720
(43) Veröffentlichungstag der Anmeldung: 18.02.2015
(73) Patentinhaber: Weiss, Siegfried Christian, 71397 Leutenbach (DE)
(72) Erfinder: Weiss, Siegfried Christian, 71397 Leutenbach (DE)
(74) Vertreter: Charrier Rapp & Liebau
(86) Internationale Anmeldenummer: PCT/EP2013/062350
(87) Internationale Veröffentlichungsnummer: WO 2013/186350

(56) Entgegenhaltungen:
- US-A1- 2005 252 131
- US-A1- 2009 272 045
- US-A1- 2010 139 178
- US-A1- 2010 319 267

## Beschreibung

Die Erfindung bezieht sich auf ein Dichtsystem zwischen einem Fensterrahmen und einer Wand eines Gebäudes, welche Wand aus Holz, natürlichem oder künstlichen Steinen, Beton oder dgl. besteht, nach dem Oberbegriff des Patentanspruchs 1.

Es ist eine Vorrichtung zum Anbringen eines wärmedämmenden Isolierbelags an einer Fenster- oder Türlaibung einer Betonwand bekannt, DE 40 40 943 A1. Die Betonwand, die eine Kellerwand sein kann, ist mit einer zur Bildung einer Fenster- oder Türöffnung in eine Wandschalung einsetzbare Schalung versehen. Ein einbaufertiger Schalungsrahmen umfasst auf seiner Außenfläche einen wärmedämmenden Isolierbelag.

Aus der DE 196 06 857 C2 geht ein Gebäude mit vorgefertigten als Wandelemente aus Holz gebildeten Modulelementen hervor; letztere bestehen aus miteinander verbundenen Bretter. In die aufrechte Wandelemente, die der Außenseite bzw. der Innenseite des Gebäudes zugekehrt sind, sind Wandöffnungen -Fensterausschnitte- zur Aufnahme von Fensterrahmen vorgesehen. Jede Wandöffnung besitzt unter anderem eine im Wesentlichen horizontale Öffnungsbegrenzung sowie im Abstand zueinander angeordnete aufrechte Öffnungsbegrenzungen. Dabei bilden die Außenseite, die untere Öffnungsbegrenzung und jede aufrechte Öffnungsbegrenzung Ebenen, welche Ebenen im rechten Winkel zueinander ausgerichtet sind. In besagte Öffnungsbegrenzungen ist ein Fensterrahmen eingesetzt, und zwar ohne besondere Vorkehrungen zwischen den Öffnungsbegrenzungen und dem benachbarten Fensterrahmen.

In der DE 93 19 194 U1 wird eine Blockständerwand mit senkrecht oder zumindest senkrechter Komponente ausgerichteten Kanthölzer der Ständer behandelt. Die Blockständerwand wird von einer Bodenkonstruktion getragen. Zwischen Blockständerwand und der Bodenkonstruktion ist eine Bitumenbahn als Abdichtung angebracht. An der Außenseite und der Innenseite der Blockständerwand sind Schichten aus Dämmmaterial aufgebracht.

In dem Forschungsbericht "Holzausbau-Architektur versus Technik" Teil 2: Fensteranschluss, Wien, März 2009, in dem auf Seite 3, zweiter Absatz auf die Thematik Fenster- und Fensterbankanschluss im Holzhausbau eingegangen wird. Vor allem wird darauf hingewiesen, dass trotzt verschiedener Dicht- und Klebebänder im Bereich des besagten Fenster- und Fensterbankanschluss zu Durchfeuchtungen einer Holkonstruktion mit der Folge von Feuchtschäden kommen kann.

US 2010 0319 267 beschreibt ein Dichtsystem nach dem Oberbegriff des Anspruchs 1.

Es ist Aufgabe der Erfindung ein Dichtsystem zwischen einem Fensterrahmen und einer Wand, vorzugsweise aus Holz eines Gebäudes zu gestalten, welches Dichtsystem sich durch Einfachheit und gute Dichtigkeitsfunktion auszeichnet. Dabei sollte das Dichtsystem Durchfeuchtungen im Holz in kritischen Zonen der Wand entgegenwirken.

Nach der Erfindung wird diese Aufgabe durch die Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass das Dichtsystem zwischen dem Fensterrahmen und der insbesondere aus Holz bestehenden Wand vor allem im Bereich des den Öffnungsbegrenzungen benachbarten Abschnitts der Außenseite, der horizontalen Öffnungsbegrenzung und den aufrechten Öffnungsbegrenzungen für eine überragende Dichtleistung sorgt. Gerade beim Einsatz von Holz als Werkstoff für die Wand bieten die auch zur Befestigung von entsprechenden Putzträger geeigneten Dichtabschnitte des jeweiligen Dichtelements hervorragenden Schutz gegen Wassereinlagerungen in den durch den Abschnitt der Außenseite, der horizontalen Öffnungsbegrenzung und den aufrechten Öffnungsbegrenzungen gebildeten Zonen. In diesen Zonen treffen drei Ebenen zusammen, nämlich die erste Ebene der Außenseite, die zweite Ebene der aufrechten Öffnungsbegrenzung und die dritte Ebene der horizontalen unteren Öffnungsbegrenzung. Das Dichtelement wirkt mit dem ersten Dichtabschnitt mit der ersten Ebene, mit dem zweiten Dichtabschnitt mit der zweiten Ebene und mit dem dritten Dichtabschnitt derart dichtend zusammen, dass unerwünschte Stoffübergänge von einem Raum zu einem anderen weitgehend vermieden werden. Anders ausgedrückt das Dichtsystem mit den Dichtabschnitten ermöglicht einen wirksamen Schutz einerseits gegen Konvektion, hervorgerufen durch Luft und Wasserdampfströmungen von der Innenseite der Wand aus in Richtung Außenseite und andererseits gegen Winddurchtritt, Schlagregen und anderen Einflüssen von der Außenseite her wirkend. Daher setzt das Dichtungssystem Maßstäbe für Einbauten von Fenstern in Fensteröffnungen von Wänden z.B. im Holzhausbau, und zwar in der Weise, dass die Bauqualität bei deutlicher Schadenverringerung verbessert wird.

Hierbei ist hervorzuheben, dass zwischen den aufrechten Rahmenabschnitten, dem unteren Rahmenabschnitt sowie den Dichtabschnitten der Dichtelemente ein Dichtkörper wirksam ist. Und zur Funktionsunterstützung sind die Dichtabschnitte des jeweiligen Dichtelements als Dichtfläche ausgeführt. Eine technisch brillante Lösung ist, wenn die Dichtflächen, die entlang der zweiten und der dritten Ebene sich erstrecken aus einem Stück hergestellt sind. Perfektioniert wird dies dadurch, dass sämtliche Dichtflächen der ersten, zweiten und dritten Ebene aus einem Stück bestehen und eine vorgefertigte Baueinheit bilden. Dank dieser Ausgestaltung können identische Dichtelemente an den gegenüberliegenden an horizontale Öffnungsbegrenzung anschließenden aufrechten Öffnungsbegrenzungen eingesetzt werden.

Die Dichtflächen des der zweiten und dritten Ebene kragen mit einem definierten ersten Überstand über das Dichtelement der ersten Ebene hinaus und das freie Ende des Überstands bildet eine Tropfkante die dem Feuchtigkeitseintritt in den Putz der Außenseite entgegenwirkt. Eine überragende Dichtleistung der Dichtelemente wird erreicht, wenn letzter bzw. die sie bildenden Baueinheit aus elastischem Werkstoff z.B. Kunststoff, Kautschuk oder dgl. bestehen. Ergänzt wird diese Dienstleistung dadurch, dass die Baueinheit bzw. ihre Dichtflächen eine Dicke zwischen 1,50 und 5,00 mm beträgt. Die geeignetste Werkstoffspezifikation bzw. Dicke der Dichtelemente lässt sich iterativ und/oder rechnerisch ermitteln.

Einen günstigen Konstruktionsbeitrag leistet die Brückenplatte, die sich zwischen freien Enden der eine definierte Länge aufweisenden und entlang der dritten Ebene verlaufenden Dichtelemente erstreckt. Die bspw. die gleiche Dicke wie die Dichtelemente aufweisende Brückenplatte besteht bspw. aus dem gleichen Werkstoff wie die besagten Dichtelemente der Baueinheit, und sie ist mit einem zweiten Überstand versehen, der ähnlich wirkt wie der erste Überstand. Schließlich sind die Dichtabschnitte des Dichtelements Plan eben ausgeführt und liegen unmittelbar auf den Ebenen der Wand aus Holz auf. Dabei ist denkbar, dass bei gegebenen baulichen Verhältnissen die Dichtabschnitte unter Vermittlung eines Zwischenelements, Klebemittels oder dgl. auf die Ebene aufgebracht sind.

In der Zeichnung wird ein Ausführungsbeispiel der Erfindung gezeigt, das nachstehend näher erläutert wird.

Es zeigen
- **Fig. 1**: eine Stirnseite eines Gebäudes mit einer mit Fenstern versehenen Wand,
- **Fig. 2**: eine Einzelheit W der Fig. 1 mit einem Fenster in der Wand,
- **Fig. 3**: eine Schrägansicht des Fensters nach Fig. 2 in einem unteren Bereich, wobei zwischen einem Fensterrahmen und der Wand ein Dichtsystem vorgesehen ist,
- **Fig**. **4**: Einzelheiten des Dichtsystems der Fig. 3,
- **Fig. 5**: eine Einzelheit X der Fig. 3,
- **Fig. 6**: eine Einzelheit Y der Fig. 3,
- **Fig. 7**: einen Schnitt nach der Linie VII-VII der Fig. 3 mit einer ersten Ausführungsform,
- **Fig. 8**: eine Ansicht entsprechend Fig. 7 mit einer zweiten Ausführungsform.

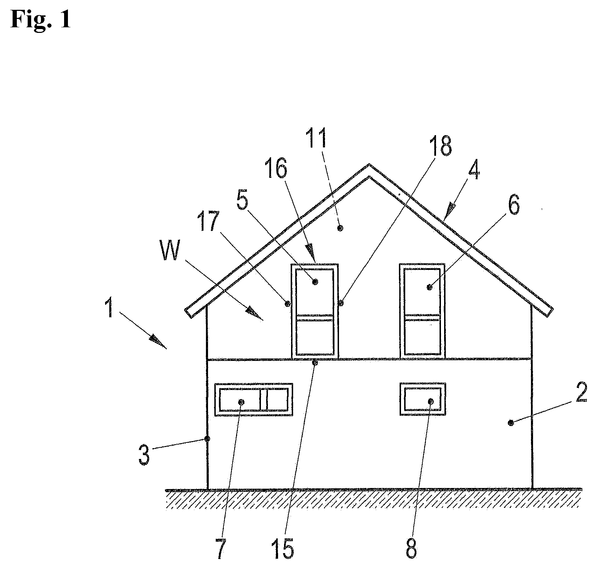

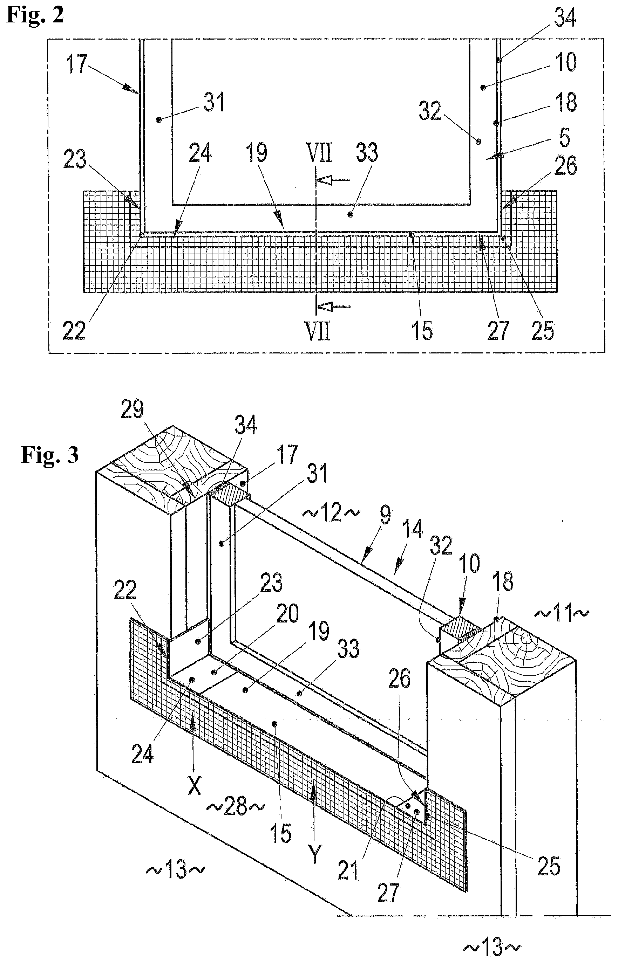

Von einem z.B. ein Wohnhaus darstellenden Gebäude 1 ist eine Stirnseite 2 -Fig.1- mit einer aufrechten Wand 3 dargestellt, die zusammen mit drei anderen nicht gezeigten Wänden ein Giebeldach 4 trägt. In die Wand 3 sind Fenster 5, 6, 7 und 8 eingebaut. Zumindest das Fenster 5 umfasst eine aus Glas bestehende Durchsichtscheibe 9, die von einem Fensterrahmen 10 - Fig. 2 und 3- aus Kunststoff, Metall, Holz oder dgl. umgeben wird. Die Wand 3 besteht aus Holz, natürlichen Steinen, Beton oder dgl., und sie weist eine einem Gebäudeinnenraum 11 zugekehrte Innenseite 12 und eine einer freien Umgebung zugekehrte Außenseite 13 auf. Für das Fenster 5 ist in der Wand 3 eine Wandöffnung 14 eingearbeitet, in welche Wandöffnung 14 der Fensterrahmen 10 des Fensters 5 eingesetzt wird. Die Wandöffnung 14 besitzt untere und obere Öffnungsbegrenzungen 15 und 16 sowie mit Abstand zueinander angeordnete aufrechte Öffnungsbegrenzungen 17 und 18. Die Außenseite 13, die untere Öffnungsbegrenzung 15 und jede aufrechte Öffnungsbegrenzung z.B. 17 schließen drei im rechten Winkel zueinander ausgerichtete Ebenen ein.

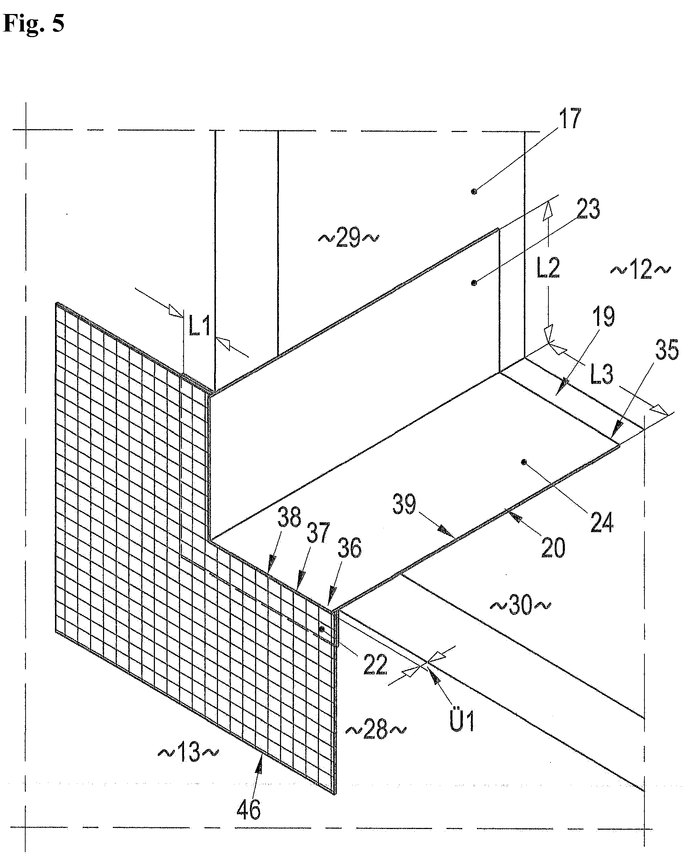

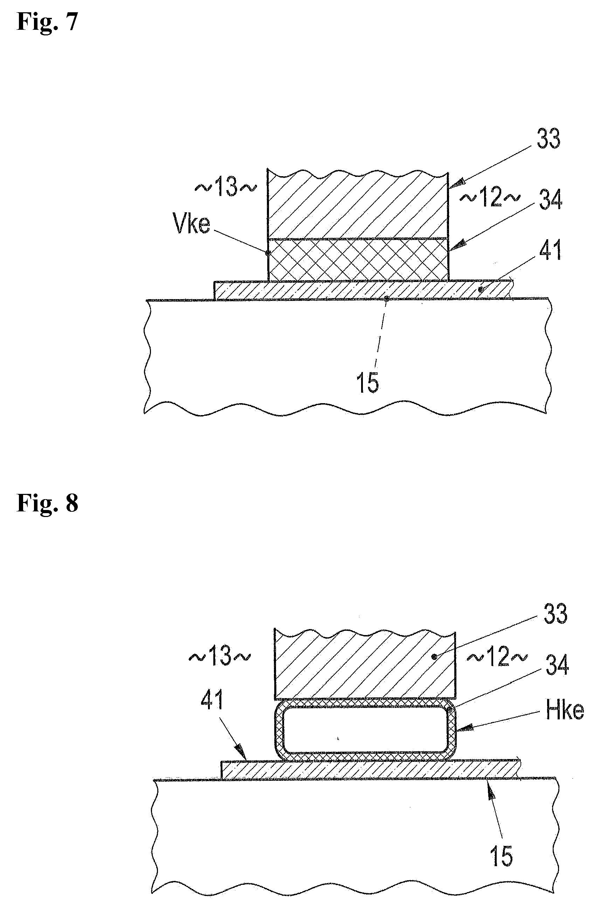

Zwischen dem Fensterrahmen 10 und der Wand 3 ist ein Dichtsystem 19 vorgesehen. Das Dichtsystem 19 verfügt über Dichtelemente 20 und 21 -Fig. 3- , die mit Dichtabschnitten 22, 23 und 24 bzw. 25, 26 und 27 -Fig. 2- an eine erste senkrechte Ebene 28 der Außenseite 13, eine zweite Ebene 29 der jeweiligen aufrechten Öffnungsbegrenzung z.B. 17 und eine dritte Ebene 30 -Fig. 5- der unteren horizontalen Öffnungsbegrenzung 15 anschließen. Dabei wirken aufrechte Rahmenabschnitte 31 und 32 und ein unterer horizontaler Rahmenabschnitt 33 des Fensterrahmens 10 mit Dichtabschnitten 23 und 24 sowie 26 und 27 der Dichtelemente 21 und 22 zusammen. Zwischen den aufrechten Rahmenabschnitten 31 und 32 und dem horizontalen unteren Rahmenabschnitt 33 sowie den benachbarten Dichtabschnitten 23 und 24 bzw. 26 und 27 der Dichtelemente 20 und 21 ist ein Dichtkörper 34 vorgesehen. Der den Umfang des Fensterahmens 10 zumindest teilweise umgebende und durch Kleben mit letzterem verbundenen Dichtkörper 34 kann als Vollkörperelement Vke oder Hohlkörperelement Hke -Fig. 7 und 8- ausgeführt sein, wobei als Werkstoff relativ elastischer Kunststoff, Kautschuk oder dgl. verwendbar ist. Darüber hinaus sind die Dichtabschnitte 22, 23 und 24 bzw. 25, 26 und 27 der Dichtelemente 20 und 21 als Dichtflächen ausgeführt, die mit den benachbarten Ebenen 28, 29 und 30 zusammenarbeiten.

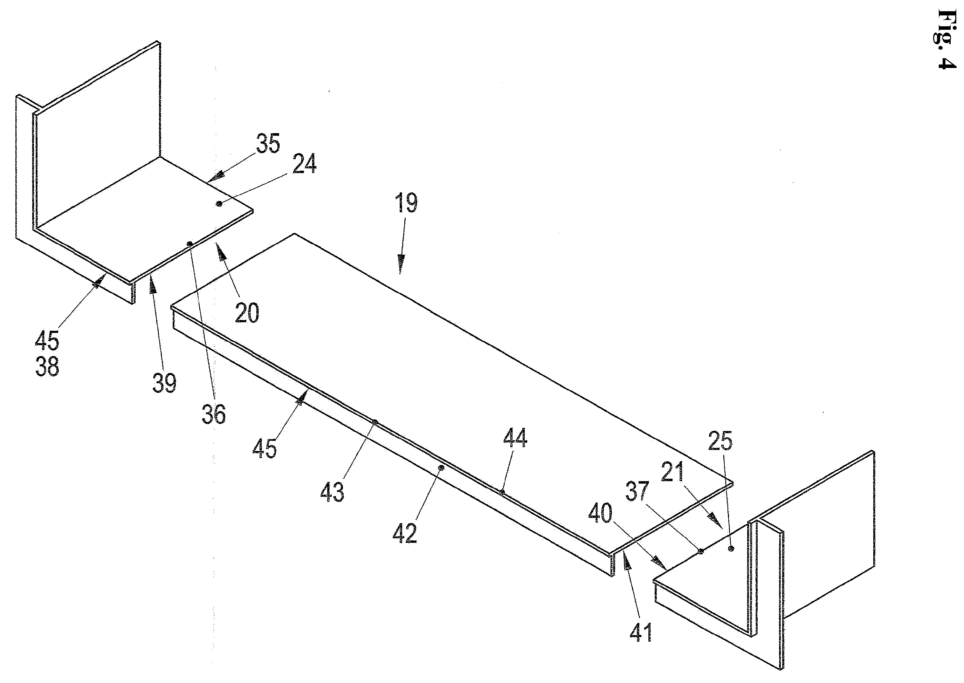

Im Ausführungsbeispiel sind sämtliche Dichtabschnitte 22, 23 und 24, die auf den Ebenen 28, 29 und 30 ruhen, aus einem Stück hergestellt und bilden bei der Fertigung und für die Montage eine leicht handhabbare Baueinheit 35 -Fig. 4 und 5-. Die Dicke der Dichtabschnitte 22, 23 und 24 beträgt bspw. zwischen 1,5 und 5,00 mm -auch andere Werte sind möglich-, und die Baueinheit 35 verfügt über eine definierte Formsteifigkeit. Denkbar ist aber auch lediglich die Dichtabschnitte 23 und 24 einstückig auszuführen und den Dichtabschnitt 22 durch geeignete Verfahren bspw. Kleben mit den Dichtabschnitten 23 und 24 zu verbinden. Die Dichtabschnitte 22,23 und 24 sowie 25,26 und 27 eines Dichtelements 20 oder 21 sind in der Weise ausgebildet, dass ein und dasselbe Dichtelement z.B. 20 zwischen der horizontalen unteren Öffnungsbegrenzung 15 bzw. den aufrechten Öffnungsbegrenzungen 16 und 17 einsetzbar ist.

Die Dichtabschnitte 23 und 24 des Dichtelements 20 -auch des Dichtelements 21- der zweiten und dritten Ebene 29 und 30 kragen mit einem ersten Überstand 36 - Maß Ül- über das Dichtelement 22 der ersten Ebene 28 hinaus, dergestalt, dass ein freier Endbereich 37 des ersten Oberstands 36 eine Art Tropfkante 45 -Fig. 4- bildet. Die Dichtabschnitte 22, 23 und 24 weisen eine definierte Länge L1, L2 und L3 -Fig. 5- auf, wobei L1<L2 und L3=L2 ist. Zwischen freien Enden 39 und 40 entlang der Dichtabschnitte 24 und 27 der Dichtelemente 20 und 21 erstreckt sich eine Brückenplatte 41 -Fig. 4-, die passgenau an die Enden 36 und 37 der Dichtabschnitte 24 und 25 anschließt.

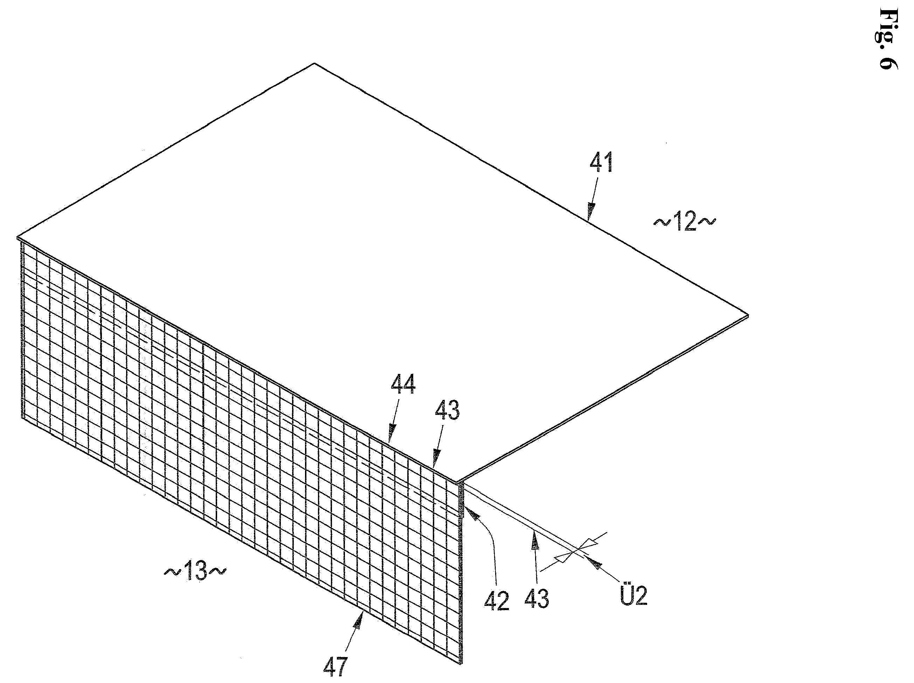

Die Brückenplatte 41 entspricht bezüglich Werkstoff und Dicke in etwa den benachbarten Dichtabschnitten 24 und 25 bzw. den Dichtelementen 20 und 21, in welche Brückenplatte 41 ein Dichtabschnitt 42 einstückig integriert ist, der mit der ersten Ebene 28 in Wirkverbindung steht. Benachbart der der Außenseite 13 der Wand 3 bzw. der ersten Ebene 28 ist ein letztere überkragender zweiter Überstand 43 -Maß Ü2- versehen, der an einem freien Ende 44 mit einer Tropfkante 45 versehen ist. An den Dichtabschnitten 22, 25 und 39 sind Putzträger 46 und 47 -Fig. 5 und 6- aus flächigen Gitterwerken, Lochblechen, Fließgeweben, Armierungsgeweben oder dgl. befestigbar, die aus Metall, Kunststoff und ähnlichen Werkstoffen bestehen können.

Der erste Überstand 36 und der zweite Überstand 43 bilden zugleich eine Abziehkante, mit Hilfe derer auf besonders einfache Weise eine gleichmäßige Stärke des auf den Putzträger 46 und 47 aufzubringenden Putzes ermöglicht wird. Das Maß Ü1 des ersten Überstands 36 und das Maß Ü2 des zweiten Überstands 43 sind hierzu entsprechend der gewünschten Schichtstärke des Putzes zu wählen, welche regelmäßig, jedoch nicht beschränkend, 1-20 mm beträgt. Beim Aufbringen des Putzes kann der überschüssige Putz, beispielsweise mit einer Traufel, entlang des Überstands 36 bzw. 43 schnell und einfach abgestreift und dabei gleichzeitig der verbleibende Putz an die Wand 3 und die Putzträger 46 angedrückt werden. Die hierdurch erzielte gleichmäßige Schichtstärke und gute Verbindung des Putzes mit der Wand 3 und den Putzträgern 46 und 47 ergibt eine besonders stabile und dauerhafte Putzschicht. Der erste Überstand 36 und der zweite Überstand 43 verhindern zudem zuverlässig ein seitliches Eindringen von Feuchtigkeit in den Putz.

Schließlich sind die Dichtabschnitte 22, 23 24, sowie 25, 26, 27 und 42 auf den Ebenen 28, 29 und 30 der ja aus Holz bestehenden Wand 3 unmittelbar aufgebracht. Weitere Möglichkeiten: Besagte Dichtabschnitte unter Vermittlung eines oder mehrerer Zwischenelemente oder eines Klebemittels aufzubringen.

## Patentansprüche

1. Dichtsystem mit einem Fensterrahmen und einer Wand eines Gebäudes, welche Wand aus Holz, natürlichem oder künstlichen Steinen, Beton oder dgl. besteht und eine Außenseite, eine Innenseite und eine Wandöffnung zum Einsetzen des Fensterrahmens umfasst, die untere und obere im Wesentlichen horizontale Öffnungsbegrenzungen sowie mit Abstand zueinander angeordnete aufrechte Öffnungsbegrenzungen aufweist, wobei die Außenseite, die untere Öffnungsbegrenzung und jede aufrechte Öffnungsbegrenzung drei Ebenen einschließen, wobei das Dichtsystem (19) weiter Dichtelemente (20; 21) umfasst die mit Dichtabschnitten (22, 23, 24; 25, 26, 27) an eine erste Ebene (28) der Außenseite (13), eine zweite Ebene (29) der jeweiligen aufrechten Öffnungsbegrenzungen (17; 18) und eine dritte Ebene (30) der unteren horizontalen Öffnungsbegrenzung (15) anschließen, und aufrechte Rahmenabschnitte (31, 32) und ein horizontaler Rahmenabschnitt (33) des Fensterrahmens (10) mit den Dichtabschnitten (23, 24; 26, 27), verlaufend entlang der zweiten und dritten Ebene (29, 30), zusammenwirken, und wobei die Dichtabschnitte (23, 24; 26, 27) des Dichtelementes (20; 21) der zweiten und dritten Ebene (29, 30) mit einem definierten ersten Überstand (36) über den Dichtabschnitt (22; 25) der ersten Ebene (28) hinauskragen **dadurch gekennzeichnet, dass** zumindest an den Dichtabschnitten (22; 25), die entlang der ersten Ebene (28) verlaufen, Putzträger (46; 47) angebracht sind.

2. Dichtsystem nach Anspruch 1, **dadurch gekennzeichnet, dass** zwischen den aufrechten Rahmenabschnitten (31, 32) und dem unteren horizontalen Rahmenabschnitt (33) sowie den benachbarten Dichtabschnitten (23, 24; 26, 27) der Dichtelemente (20; 21) ein Dichtkörper (34) vorgesehen ist.

3. Dichtsystem nach Anspruch 1, **dadurch gekennzeichnet, dass** die Dichtabschnitte (22, 23, 24; 25, 26, 27) des jeweiligen Dichtelements (20; 21) als Dichtflächen ausgeführt sind.

4. Dichtsystem nach den Ansprüchen 1 und 3, **dadurch gekennzeichnet, dass** zumindest die Dichtabschnitte (23, 24; 26, 27), die entlang der zweiten und dritten Ebene (29 und 30) verlaufen, aus einem Stück hergestellt sind.

5. Dichtsystem nach den Ansprüchen, 1, 3 und 4 **dadurch gekennzeichnet, dass** sämtliche Dichtabschnitte (22, 23, 24; 25, 26, 27) aus einem Stück hergestellt sind und eine vorgefertigte Baueinheit (35) bilden.

6. Dichtsystem nach einem oder mehreren der vorangehenden Ansprüche, **dadurch gekennzeichnet, dass** die Dichtabschnitte (22, 23, 24; 25, 26, 27) eines Dichtelements (20; 21) in der Weise ausgebildet sind, dass ein und dasselbe Dichtelement (20; 21) zwischen der unteren horizontalen Öffnungsbegrenzung (15) bzw. den beiden aufrechten Öffnungsbegrenzungen (17, 18) einsetzbar ist.

7. Dichtsystem nach einem oder mehreren der vorangehenden Ansprüche, **dadurch gekennzeichnet, dass** die Dichtabschnitte (22, 23, 24; 25, 26, 27) der Dichtelemente (20; 21) aus relativ elastischem Werkstoff mit gezielten Dichteigenschaften z.B. Kunststoff, Kautschuk oder dgl. bestehen.

8. Dichtsystem nach einem oder mehreren der vorangehenden Ansprüche, **dadurch gekennzeichnet, dass** die Dichtabschnitte (22, 23, 24; 25, 26, 27) der Dichtelemente (20; 21) z.B. eine Dicke zwischen 1,50 und 8,50 mm aufweisen.

9. Dichtsystem nach einem oder mehreren der vorangehenden Ansprüche, **dadurch gekennzeichnet, dass** die Dichtabschnitte (22, 23, 24; 25, 26, 27) der Dichtelemente (20; 21), die entlang der zweiten Ebene (29) und dritten Ebene (30) verlaufen eine definierte Länge aufweisen, wobei zwischen freien Enden (39; 40) der Dichtabschnitte (24; 27) eine Brückenplatte (41) sich erstreckt.

10. Dichtsystem nach Anspruch 9, **dadurch gekennzeichnet, dass** die Brückenplatte (41) benachbart der Außenseite (13) mit einem zweiten die erste Ebene (28) überkragenden Überstand (43) versehen ist.

11. Dichtsystem nach Anspruch 9 oder 10, **dadurch gekennzeichnet, dass** die Brückenplatte (41) bezügliche Werkstoff und Dicke den benachbarten Dichtabschnitten (24, 27) entspricht.

12. Dichtsystem nach einem oder mehreren der vorangehenden Ansprüche, **dadurch gekennzeichnet, dass** die Wand (3) mit der ersten Ebene (28), der zweiten Ebene (29) und der dritten Ebene (30) aus Holz besteht und die Dichtabschnitte (22, 23, 24; 25, 26, 27) der Dichtelement (20; 21) unmittelbar auf die besagten Ebenen (28, 29, 30) aufgebracht sind.

13. Dichtsystem nach Anspruch 12, **dadurch gekennzeichnet, dass** die Dichtabschnitte (22, 23, 24; 25, 26, 27) der Dichtelemente (20; 21) unter Vermittlung eines Zwischenelements, Klebemittels oder dgl. auf die Ebenen (28, 29, 30) aufgebracht sind.

## Claims

1. Sealing system with a window frame and a wall of a building, which wall is made of timber, natural or artificial stone blocks, concrete or the like and comprises an external side, an internal side and a wall opening for insertion of the window frame, which has lower and upper substantially horizontal opening boundaries and upright opening boundaries which are arranged a distance from one another, wherein the external side, the lower opening boundary and each upright opening boundary include three planes, wherein the sealing system (19) also comprises sealing elements (20; 21) which with sealing sections (22, 23, 24; 25, 26, 27) adjoin a first plane (28) of the external side (13), a second plane (29) of the respective upright opening boundaries (17; 18) and a third plane (30) of the lower horizontal opening boundary (15), and upright frame sections (31, 32) and a horizontal frame section (33) of the window frame (10) cooperate with the sealing sections (23, 24; 26, 27), running along the second and the third plane (29, 30), and wherein the sealing sections (23, 24; 26, 27) of the sealing element (20; 21) of the second and the third plane (29, 30) protrude over the sealing section (22; 25) of the first plane (28) with a defined first projection (36), **characterised in that** plaster base (46; 47) is attached at least to the sealing sections (22; 25) which run along the first plane (28).

2. Sealing system according to claim 1, **characterised in that** a sealing body (34) is provided between the upright frame sections (31, 32) and the lower horizontal frame section (33) and the adjacent sealing sections (23, 24; 26, 27) of the sealing elements (20; 21).

3. Sealing system according to claim 1, **characterised in that** the sealing sections (22, 23, 24; 25, 26, 27) of the respective sealing element (20; 21) are implemented in the form of sealing surfaces.

4. Sealing system according to claims 1 and 3, **characterised in that** at least the sealing sections (23, 24; 26, 27) which run along the second and the third plane (29 and 30) are manufactured in one piece.

5. Sealing system according to claims 1, 3 and 4, **characterised in that** all the sealing sections (22, 23, 24; 25, 26, 27) are manufactured in one piece and form a prefabricated structural unit (35).

6. Sealing system according to one or more of the preceding claims, **characterised in that** the sealing sections (22, 23, 24; 25, 26, 27) of a sealing element (20; 21) are constructed in such a way that one and the same sealing element (20; 21) can be inserted between the lower horizontal opening boundary (15) and the two upright opening boundaries (17, 18).

7. Sealing system according to one or more of the preceding claims, **characterised in that** the sealing sections (22, 23, 24; 25, 26, 27) of the sealing elements (20; 21) are made of relatively elastic material with specific sealing properties, e.g. plastic, rubber or the like.

8. Sealing system according to one or more of the preceding claims, **characterised in that** the sealing sections (22, 23, 24; 25, 26, 27) of the sealing elements (20; 21) have for example a thickness of between 1.50 and 8.50 mm.

9. Sealing system according to one or more of the preceding claims, **characterised in that** the sealing sections (22, 23, 24; 25, 26, 27) of the sealing elements (20; 21) which run along the second plane (29) and the third plane (30) have a defined length, wherein a bridging sheet (41) extends between free ends (39; 40) of the sealing sections (24; 27).

10. Sealing system according to claim 9, **characterised in that** adjacent to the external side (13) the bridging sheet (41) is provided with a second projection (43) protruding over the first plane (28).

11. Sealing system according to claim 9 or 10, **characterised in that** the bridging sheet (41) corresponds to the adjacent sealing sections (24, 27) with regard to material and thickness.

12. Sealing system according to one or more of the preceding claims, **characterised in that** the wall (3) with the first plane (28), the second plane (29) and the third plane (30) is made of timber and the sealing sections (22, 23, 24; 25, 26, 27) of the sealing elements (20; 21) are attached directly to said planes (28, 29, 30).

13. Sealing system according to claim 12, **characterised in that** the sealing sections (22, 23, 24; 25, 26, 27) of the sealing elements (20; 21) are attached to the planes (28, 29, 30) through the intermediary of an intermediate element, adhesive or the like.

## Revendications

1. Système d'étanchéité comprenant un châssis de fenêtre et un mur d'un immeuble, lequel mur est constitué de bois, de pierre naturelle ou artificielle, de béton ou similaire et comprend une face extérieure, une face intérieure et une ouverture de mur servant à insérer le châssis de fenêtre, laquelle présente des délimitations d'ouverture essentiellement horizontales inférieures et supérieures ainsi que des délimitations d'ouverture verticales disposées à distance les unes des autres, sachant que la face extérieure, la délimitation d'ouverture inférieure et chaque délimitation d'ouverture verticale forment trois niveaux, sachant que le système d'étanchéité (19) comprend par ailleurs des éléments d'étanchéité (20 ; 21), qui se raccordent par des sections d'étanchéité (22, 23, 24 ; 25, 26, 27), à un premier niveau (28) de la face extérieure (13), à un deuxième niveau (29) des délimitations d'ouverture (17 ; 18) verticales respectives et à un troisième niveau (30) de la délimitation d'ouverture (15) horizontale inférieure, et que des sections de châssis verticales (31, 32) et une section de châssis horizontale (33) du châssis de fenêtre (10) coopèrent avec les sections d'étanchéité (23, 24 ; 26, 27) s'étendant le long du deuxième et du troisième niveau (29, 30), et sachant
que les sections d'étanchéité (23, 24 ; 26, 27) de l'élément d'étanchéité (20 ; 21) du deuxième et du troisième niveau (29, 30) dépassent par un premier débord (36) défini de la section d'étanchéité (22 ; 25) du premier niveau (28), **caractérisé en ce**
**que** des supports de crépi (46 ; 47) sont mis en place au moins au niveau des sections d'étanchéité (22 ; 25), qui s'étendent le long du premier niveau (28) .

2. Système d'étanchéité selon la revendication 1, **caractérisé en ce qu'**un corps d'étanchéité (34) est prévu entre les sections de châssis verticales (31, 32) et la section de châssis horizontale inférieure (33) et les sections d'étanchéité (23, 24 ; 26, 27) adjacentes également des éléments d'étanchéité (20 ; 21).

3. Système d'étanchéité selon la revendication 1, **caractérisé en ce que** les sections d'étanchéité (22, 23, 24 ; 25, 26, 27) de l'élément d'étanchéité (20 ; 21) respectif sont réalisées sous la forme de faces d'étanchéité.

4. Système d'étanchéité selon les revendications 1 et 3, **caractérisé en ce qu'**au moins les sections d'étanchéité (23, 24 ; 26, 27), qui s'étendent le long du deuxième et du troisième niveau (29 et 30), sont fabriquées à partir d'une pièce.

5. Système d'étanchéité selon les revendications 1, 3 et 4, **caractérisé en ce que** toutes les sections d'étanchéité (22, 23, 24 ; 25, 26, 27) sont fabriquées à partir d'une pièce et forment une unité de construction (35) préfabriquée.

6. Système d'étanchéité selon l'une quelconque ou plusieurs des revendications précédentes, **caractérisé en ce que** les sections d'étanchéité (22, 23, 24 ; 25, 26, 27) d'un élément d'étanchéité (20 ; 21) sont réalisées de telle manière qu'un seul et même élément d'étanchéité (20 ; 21) peut être inséré entre la délimitation d'ouverture (15) horizontale inférieure ou les deux délimitations d'ouverture (17, 18) verticales.

7. Système d'étanchéité selon l'une quelconque ou plusieurs des revendications précédentes, **caractérisé en ce que** les sections d'étanchéité (22, 23, 24 ; 25, 26, 27) des éléments d'étanchéité (20 ; 21) sont constituées d'un matériau relativement élastique présentant des propriétés d'étanchéité ciblées, par exemple de plastique, de caoutchouc ou similaire.

8. Système d'étanchéité selon l'une quelconque ou plusieurs des revendications précédentes, **caractérisé en ce que** les sections d'étanchéité (22, 23, 24 ; 25, 26, 27) des éléments d'étanchéité (20 ; 21) présentent par exemple une épaisseur comprise entre 1,50 et 8,50 mm.

9. Système d'étanchéité selon l'une quelconque ou plusieurs des revendications précédentes, **caractérisé en ce que** les sections d'étanchéité (22, 23, 24 ; 25, 26, 27) des éléments d'étanchéité (20 ; 21), qui s'étendent le long du deuxième niveau (29) et du troisième niveau (30), présentent une longueur définie, sachant qu'un panneau formant un pont (41) s'étend entre des extrémités libres (39 ; 40) des sections d'étanchéité (24 ; 27).

10. Système d'étanchéité selon la revendication 9, **caractérisé en ce que** le panneau formant un pont (41) est pourvu, de manière adjacente à la face extérieure (13), d'un deuxième débord (43) dépassant le premier niveau (28) .

11. Système d'étanchéité selon la revendication 9 ou 10, **caractérisé en ce que** le panneau formant un pont (41) correspond, en termes de matériau et d'épaisseur, aux sections d'étanchéité (24, 27) adjacentes.

12. Système d'étanchéité selon l'une quelconque ou plusieurs des revendications précédentes, **caractérisé en ce que** le mur (3) présentant le premier niveau (28), le deuxième niveau (29) et le troisième niveau (30) est constitué de bois, et **en ce que** les sections d'étanchéité (22, 23, 24 ; 25, 26, 27) des éléments d'étanchéité (20 ; 21) sont installées directement sur lesdits niveaux (28, 29, 30).

13. Système d'étanchéité selon la revendication 12, **caractérisé en ce que** les sections d'étanchéité (22, 23, 24 ; 25, 26, 27) des éléments d'étanchéité (20 ; 21) sont installées sur les niveaux (28, 29, 30) par l'entremise d'un élément intermédiaire, d'un produit adhésif ou similaire.
